Europäisches Patentamt

**European Patent Office**

Office européen des brevets

(19)

(11) Publication number : **0 530 277 B1**

(12) **EUROPEAN PATENT SPECIFICATION**

(45) Date of publication of patent specification :
**10.08.94 Bulletin 94/32**

(51) Int. Cl.[5] : **B01J 13/04, A23G 3/30**

(21) Application number : **91910100.6**

(22) Date of filing : **15.05.91**

(86) International application number :
**PCT/DK91/00133**

(87) International publication number :
**WO 91/17821 28.11.91 Gazette 91/27**

(54) **PROCESS FOR PREPARING MICROCAPSULES CONTAINING A FLAVOURANT EMBEDDED IN A MATRIX MATERIAL AND PRODUCTS PREPARED BY USING THE PROCESS.**

(30) Priority : **15.05.90 DK 1205/90**
**05.10.90 DK 2412/90**

(43) Date of publication of application :
**10.03.93 Bulletin 93/10**

(45) Publication of the grant of the patent :
**10.08.94 Bulletin 94/32**

(84) Designated Contracting States :
**DK FR NL**

(56) References cited :
**EP-A- 0 070 719**
**US-A- 4 122 195**
**US-A- 4 519 961**
**US-A- 4 695 463**

(73) Proprietor : **DANOCHEMO A/S**
**Malmparken 5**
**DK-2750 Ballerup (DK)**

(72) Inventor : **SKELBAEK, Tove**
**Tingmosen 28**
**DK-3500 Vaerlose (DK)**
Inventor : **THORENGAARD, Bitten**
**Skovvangen 28**
**DK-2920 Charlottenlund (DK)**

(74) Representative : **Holtzer, Merete Byrch et al**
**c/o Lehmann & Ree A/S**
**Grundtvigsvej 37**
**DK-1864 Frederiksberg C (DK)**

EP 0 530 277 B1

## Description

The present invention relates to a process for preparing microcapsules containing a flavourant embedded in a matrix material comprising spraying an aqueous emulsion, suspension or solution of the flavourant and the matrix material under the supply of air having a temperature of 50 to 120°C while simultaneously introducing a fine particulate spraying agent and subjecting the sprayed product to a further drying in a fluidized bed at a temperature between 0 and 120°C to form a free-flowing product.

Microcapsules containing a flavourant having fragrance and/or taste properties are used in a variety of products, such as foods and drinks, confectionery products, medical products, tooth paste, detergents, cosmetic and sanitary articles.

Irrespective of the area of use it is important that the microcapsules are stable by which is meant that the content of flavourant is maintained substantially unchanged. This implies that the flavourant must not escape or be converted, e.g. by reaction with the oxygen of the air or by reaction with other substances.

Herein flavourants mean substances having fragrance and/or taste properties. Flavourants are typically volatile compounds which tend to evaporate quickly unless they are encapsulated effectively in a non-reactive encapsulant.

Various processes for preparing microcapsules of the type mentioned above for use in chewing gum are known. When using such microcapsules in chewing gum the aim is to obtain a gradual release of the flavourant and control of the release so that the chewing gum maintains its flavour even when it is chewed for longer periods of time, such as several minutes.

US patent specification No. 4,386,106 discloses a process wherein the matrix material comprises gelatine, natural gum and a plasticizer and wherein an aqueous emulsion of a flavourant and the matrix material is roll dried to form a solid mass which is subsequently ground to form a powder, and the powder formed is coated with a water-insoluble material consisting of polyvinyl acetate, polyvinyl alcohol, zein or ethyl cellulose.

WO 89/05590 discloses a method of making a chewing gum containing wax embedded ingredients, including powdered flavourants to obtain a delayed release of the wax embedded ingredients which are incorporated in the chewing gum in comminuted particle form.

It is also well known to prepare a free-flowing powder containing a flavourant by spray drying and by using a matrix material consisting of gelatine or natural gum and a carbohydrate, such as saccharose, fructose and corn sirup.

However, a powder containing a flavourant and prepared by a conventional spray drying method does not provide sufficient protection of the flavourant to prevent part of the flavourant from escaping during the preparation and before use of the powder, or as composite flavourants are often used, such as e.g. orange oil, the more volatile component will escape and the composite flavourant will change character as a result thereof. The particles formed are porous and do not have a sufficiently high resistance against oxygen to prevent the oxygen of the air from reacting with the flavourant and converting parts of said flavourant into undesired compounds, see i.a. Taylor, A. H. (1983), Encapsulation systems and their applications in the flavour industry. Food Flav. Ingr. Proc. Pckg, Sep. 1983, pp. 48-52.

US patent No. 4 519 961 discloses a process for converting an oxygen-sensitive, oil soluble substance into a dry, free-flowing powder comprising atomizing a dispersion containing the oil soluble substance in a spray tower to form discrete particles and contacting said particles with a spraying agent selected among silanized silica and metal salts of higher fatty acids. In this process the spraying agent is used in an amount of from 0.037 to 0.123 parts by weight based on the weight of the dispersion.

Surprisingly, it has now been found that the drawbacks of the prior art spray drying methods can be reduced or eliminated by the process according to the invention, which process is characterized in that the matrix material further comprises wax.

In conventional spray drying hot air having a temperature of 180-300° is typically supplied. When the liquid particles formed by the spraying meet the very hot air, a steam explosion occurs which results in that the matrix material in which the flavourant is enclosed becomes porous and permeable to flavourant and oxygen. The product formed typically has a particle density of from 0.7 to 0.9 g/ml.

In the process of the invention comprising drying the liquid drops at a much lower temperature a considerably more dense matrix material is obtained, said matrix material having a particle density of from 1.0 to 1.5 g/ml, preferably from 1.1 to 1.4 g/ml, and as a result thereof it becomes substantially non-permeable to both the flavourant enclosed in the matrix material and to the oxygen contained in the ambient air.

A further advantage of the process according to the invention is that the solid particles formed by the spray drying are spherical as opposed to the particles formed by conventional spray drying which are irregular. As a result of the regular spherical shape the surface area is smaller which results in a reduced exudation of the flavourant from the microcapsules. Furthermore a smaller part of the flavourant will be deposited on the sur-

2

face of the particles than by conventional spray drying.

Furthermore, it is possible to obtain larger particles with the process according to the invention and hence a reduced relationship between the surface area and the volume compared to the conventional spray drying, said reduced relationship contributing to reduce the evaporation. Thus, the process according to the invention allows the preparation of microcapsules having a size interval in the range of from 50-1000 µm, whereas the particle size interval for particles prepared by the prior art processes ordinarily is considerably more narrow and typically varies in the range of from 10 to 100 µm.

Moreover, it has surprisingly been found that by using a matrix material which furthermore comprises wax it is possible to obtain a microencapsulated product containing a flavourant, said product exhibiting a considerably extended flavour release in confectionery products, such as chewing gum.

The flavourants used in the process according to the invention are water in-soluble in most uses and may contain functional groups, such as alcohols, ethers, aldehydes, acetales, ketones, esters and lactones and comprise e.g. terpenes, heterocyclic compounds and mixtures thereof having molecular weights of from approx. 100 to approx. 300 and having a boiling point below 180°C, or the flavourants may be constituted by essential oils having a content of the low molecular compounds mentioned above, such as anise oil, pine needle oil, jasmin oil, camphorated oil, wintergreen oil, lavender oil, melissa oil, rosemary oil, eucalyptus oil, citrus oils and peppermint oil and spice oils and extracts of spice oils, such as extracts of parsley oil, lovage oil and dill oil.

Examples of water-soluble flavourants are acidulants, such as citric acid, tartaric acid, malic acid, orthophosphoric acid; sweeteners, such as glycyrrhizin and glycyrrhizinate, and bitter substances, such as coffein.

As matrix material in the process according to the invention colloids may be used, such as vegetable gum, e.g. gum arabic, and tragacanth gum, starch, including modified starch, dextrins, proteins, e.g. gelatine, including gelatine recovered from fish and other marine animals, succinylated gelatine, soya protein and caseinates. Furthermore the matrix material may include saccharides, such as saccharose, glucose syrup, sugar alcohols and synthetic sweeteners and mixtures thereof. An example of a preferred matrix former is gelatine having a Bloom strength of from 0 to 300. The selection of matrix material depends on the flavourant used. For instance different types of gum arabic produce different permeability.

In order to obtain a slow release of flavourant from the microcapsules the matrix material contains wax, preferably relatively hard, water-insoluble wax having a low penetrometer resistance and a melting point which is lower than the boiling point of the flavourant. In an emulsion or suspension the following proportion is used : from 1-15% by weight of flavourant, from 20-35% by weight of colloid and from 1-8% by weight of wax, and the wax constitutes from 5 to 20% by weight of the finished microcapsules, preferably about 10% by weight.

The waxes used may be natural waxes (wax esters), such as carnauba wax and candelila wax or synthetic waxes which are typically long-chained carbonhydrides, such as petroleum wax, paraffin wax, Hartwachs SP1044 supplied by Dansk Voksfabrik (synthesized by the Fischer-Tropsch process from carbon monoxide and hydrogen being catalytically converted into a mixture of paraffinic hydrocarbons wherein the lower molecular weight fraction is removed by distillation and having a coagulation point of 93° to 99°C, cf. C.F.R. title 21, § 172.615, published by the US Food and Drug Administration), polyethylene wax, polyethylene glycol and polyethylene oxide having a high molecular weight, etc. or stearin. It is preferred to use hard, microcrystalline waxes having a melting point of from approx. 40° to approx. 120°C, preferably from about 60° to 90°C.

Additives, such as emulsifiers, complexing agents, plasticizers and antioxidants may be used in the matrix materials mentioned above.

As spraying agent in the process according to the invention hydrophilic agents which furthermore act as contact drying agents may be used and which may constitute a relatively large part of the product (up to 30%), such as starch, modified starch, casein, tricalcium phosphate, lactose, mannitol, ethyl cellulose, coagulated albumin and cured gelatine, or hydrophobic agents which constitute a relatively small part of the product (2-10%) may be used , such as hydrogenated castor oil, polyoxide, talc, vegetable wax, preferably carnauba wax and candelila wax, and paraffin wax, preferably a wax marketed under the name Hartwachs SP1044. The waxes are preferably microcrystalline. A minimum of 1 part by weight of fine particulate spraying agent, as described in WO-A-8806916, is used per part by weight emulsion, suspension or solution. The melting point of the spraying agent is preferably higher than 40°C, most preferable from 80°C-130°C.

In the preparation of a microencapsulated flavour product for use in confectionery products, such as chewing gum, where a flavour extension is desired it is preferred to use a spraying agent which is relatively hydrophobic and/or insoluble in water, such as casein, wax, paraffin (petroleum wax). As a result thereof the solvent effect of the saliva on the microcapsules is reduced.

Theoretically an emulsion, suspension or solution containing volatile flavourants will lose constituents which are highly volatile in connection with a spraying in a hydrophobic spraying agent. On the other hand more compact particles having a higher total content of flavourant can be obtained after drying is completed.

In a preferred embodiment of the process according to the invention an emulsion of an oil containing a flavourant is sprayed under oxygen-free conditions in an aqueous colloid solution which optionally may contain water-soluble flavourants, the oils drops having a diameter of from 0.2 to 10 $\mu$m, preferably about 1 $\mu$m. By using an emulsion of an oil containing a flavourant as starting material it is possible to prepare products having a content of flavourant of from 0.1-40% by weight, preferably from 15-20% by weight. A proportion of from 1/99 to 2/3 parts by weight of flavourant per part by weight of matrix material is preferably used. In a particularly preferred process according to the invention an emulsion which furthermore comprises wax is used.

The emulsion is preferably heated to between 20 and 80°C, adjusted to a viscosity of from 80 - 250 mPa.s (cP) and sprayed into fine drops (diameter about 0.1 - 1.2 mm) by means of e.g. a disc sprayer in a spraying tower where the emulsion, at the moment of spraying, meets air having a temperature of between 50 and 120°C. As a result thereof the outer part of the matrix material in the drops solidifies, thereby forming a shell so that the particles no longer are permeable to the flavourants but so that water is still allowed to diffuse. The formation of the shell may optionally be expedited further by blowing a spraying agent in the form of e.g. corn starch into the spraying tower. In case it is not desired that the spraying agent constitutes a greater amount in the shell formation, a spraying agent such as a wax marketed under the name Hartwachs SP1044 or hydrogenated castor oil can be used.

In a further preferred embodiment of the process according to the invention an emulsion of an oil containing a flavourant and an aqueous colloid solution is sprayed under the supply of air having an temperature of 60 - 85°C and the sprayed product is subsequently subjected to a further treatment in a fluidized bed at a temperature of between 20 and 85°C.

The drying of the product in a fluidized bed is preferably effected with dehumidified air. The drying time is between 1 and 10 hours depending on the bach size to obtain a product having a water content of from approx. 2 to approx. 7%.

Furthermore the invention relates to microcapsules comprising a flavourant embedded in a matrix material prepared by spraying an aqueous emulsion, suspension or solution of flavourants and the matrix material under the supply of air having a temperature of 50 to 120°C while simultaneously introducing a spraying agent, and subjecting the sprayed product to a further drying in a fluidized bed at a temperature of between 0 and 120°C, wherein the matrix material further comprises wax and that the particle density of the obtained spherical microcapsules varies within the range of 1.0 to 1.5 g/ml.

Finally the invention relates to a chewing gum containing the microcapsules mentioned above.

## Example 1

### Microencapsulation of mint oil

200 g of Water was heated to 60°C, 790 g of 240 Bloom type A gelatine was added and dissolved in water under stirring.

133.8 g of Carnauba wax was dissolved in 343 g of mint oil at 67-68°C to a homogeneous mixture.

The mint oil/wax mixture was slowly transferred to the gelatine/water solution under vigorous stirring. The comminution of the oil drops was continued until the oil drops had a size of 1 $\mu$m.

The viscosity was then adjusted to 180 mPa.s (cP) by dilution with water.

The emulsion was now introduced into the spraying tower at a velocity of 3 l/min. and sprayed therein in the form of fine drops in a cloud of fine casein particles as spraying agent.

The spraying agent was supplied to the spraying tower with a hot air stream of 85°C and in an amount of 3-4 kg/min.

In order to ensure a rapid evaporation of water and to expedite the drying of the surface of the fine drops formed by spraying, additional air having a temperature of 85°C was supplied to the spraying tower in the spraying zone.

The spraying of the emulsion was effected by means of a disc sprayer having 2300 rotations/min. The temperature in the spraying tower was 65°C.

The emulsion drops having freshly solidified surfaces were transferred together with the spraying agent to a fluidized bed and maintained fluidized for about 3 hours by the introduction of drying air having a temperature of 63°C. During the drying the temperature of the encapsulated product did not exceed 40°C and the excess fine casein particles were recycled to a hopper.

The ready-dried product was then removed and sieved into two fractions, viz. a product fraction of 125-450 $\mu$m and a coarse fraction.

The product obtained was a free-flowing product having a high particle density of 1.2 g/ml.

The product is suitable for use in confectionery which requires an extension of flavour, e.g. chewing gum.

Example 2

Microencapsulation of spearmint oil

2000 g of Water was heated to 60°C, 790 g of 240 Bloom type A gelatine was added and dissolved in the water under stirring.

134 g of Carnauba wax was dissolved in 343 g of spearmint oil at 67°C.

The spearmint oil/wax mixture was slowly transferred to the gelatine/water solution under vigorous stirring. The comminution of the oil drops was continued until the oil drops had a size of 1 μm.

The viscosity was now adjusted to 160 mPa.s (cP) by dilution with water.

The emulsion was then introduced into the spraying tower at a velocity of 3 l/min. and sprayed therein in the form of fine drops in a cloud of finely ground casein particles as spraying agent.

The spraying agent was supplied to the spraying tower with a hot air stream of 85°C and in an amount of 3-4 kg/min.

In order to ensure a rapid evaporation of water and to expedite the drying of the surface of the fine drops formed by spraying, additional air having a temperature of 85°C was supplied to the spraying tower in the spraying zone.

The spraying of the emulsion was effected by means of a disc sprayer having 2300 rotations/min. The temperature in the spraying tower was 60°C.

The emulsion drops having freshly solidified surfaces were transferred together with the spraying agent to a fluidized bed and maintained fluidized for about 3 hours by the introduction of drying air having a temperature of 63°C. During the drying the temperature of the encapsulated product did not exceed 40°C and the excess finely ground casein particles were recycled to a hopper.

The ready-dried product was then removed and sieved into two fractions, viz. a product fraction of 125-450 μm and a coarse fraction.

The product obtained was a free-flowing product having a high particle density.

Example 3

Microencapsulation of orange oil

2000 g of Water was heated to 60°C, 790 g of 240 Bloom type A gelatine was added and dissolved in the water under stirring.

735 g of Lunacerin® W70 (paraffin wax) was melted at 73°C and 200 g of cold orange oil was added and the mixture was heated to 60°C.

The orange oil/wax mixture was slowly transferred to the gelatine/water solution under vigorous stirring. The comminution of the oil drops was continued until the oil drops had a size of 1 μm.

The viscosity was then adjusted to 160 mPa.s (cP) by dilution with water.

The emulsion was then introduced into a spraying tower at a velocity of 3 l/min. and sprayed therein in the form of fine drops in a cloud of fine wax particles (Hartwachs SP1044 supplied from Dansk Voksfabrik) as spraying agent.

The spraying agent was supplied to the spraying tower with a hot air stream of 85°C and in an amount of 3-4 kg/min.

In order to ensure a rapid evaporation of water and to expedite the drying of the surface of the fine drops formed by spraying, additional air having a temperature of 85°C was supplied to the spraying tower in the spraying zone.

The spraying of the emulsion was effected by means of a disc sprayer having 2300 rotations/min. The temperature in the spraying tower was 55°C.

The emulsion drops having freshly solidified surfaces were transferred together with the Hartwachs SP1044 spraying agent to a fluidized bed and maintained fluidized for about 3 hours by the introduction of drying air having a temperature of 63°C. During the drying the temperature of the encapsulated product did not exceed 40°C and the excess fine Hartwachs SP1044 particles were recycled to a hopper.

The ready-dried product was then removed and sieved into two fractions, viz. a product fraction of 125-450 μm and a coarse fraction.

The product obtained was a free-flowing product having a high particle density.

Example 4

Evaluation of encapsulation of flavourants

A taste panel consisting of 10 persons tasted 6 different pieces of chewing gum and reported the time within which the flavourant could be tasted after the point of start. Table 1 below shows the average values in seconds obtained for three different flavour products in chewing gum formulations comprising the flavour products in encapsulated and non-encapsulated form, respectively. In addition to 1-2% flavourant the chewing gum formulation further comprises about 20% sugar, about 24% gum base and about 56% paraffin.

Preparation of chewing gum containing flavour oil or coated flavour

24 g of Gum base was melted and 56 g of melted paraffin and 20 g of sugar were added under vigorous stirring. 1.4-10 g of Flavourant was added under stirring at 48-50°C. The flavourant was used in an amount corresponding to 1.4 g pure oil. In the addition of microencapsulated flavourant the amount added corresponds to about 1-2% by weight of the finished chewing gum.

Stirring was continued until solidification occured. The chewing gum which had started to solidify was poured out onto a glass plate and was pressed flat by another glass plate. The chewing gum was then allowed to stand for the night. The next day the chewing gum was cut into small pieces of 0.95-1.10 g.

## Table 1

| Flavourant | Initial taste in sec. after beginning of tasting | |
|---|---|---|
| Mintflavour | 5 | Not encapsulated |
| Encapsulated mintflavour | 90 | Encapsulated according to example 1 |
| Spearmint flavour | 2 | Not encapsulated |
| Encapsulated spearmint flavour | 25 | Encapsulated according to example 2 |
| Orange oil | 1 | Not encapsulated |
| Encapsulated orange oil | 23 | Encapsulated according to example 3 |

The results in table 1 show that by using flavourants which are encapsulated according to the invention in chewing gum a considerable extension of flavour start is obtained compared to chewing gum which contains non-encapsulated flavourants.

**Claims**

1. A process for preparing microcapsules containing a flavourant embedded in a matrix material comprising spraying an aqueous emulsion, suspension or solution of the flavourant and the matrix material under the supply of air having a temperature of 50° to 120°C while simultaneously introducing a fine particulate spraying agent and subjecting the sprayed product to a further drying in a fluidized bed at a temperature between 0° and 120°C to form a free-flowing product, **characterized** in that the matrix material further comprises wax.

2. A process according to claim 1, **characterized** in that an emulsion of an oil containing a flavourant and aqueous colloid solution is sprayed under the supply of air having a temperature of from 60° to 85°C, and that the sprayed product is subjected to an additional treatment in a fluidized bed at a temperature between 20° and 85°C.

3. A process according to claims 1 or 2, **characterized** in spraying an emulsion comprising oil drops containing a flavourant having a diameter of from 0.2-10 µm.

4. A process according to any of the preceding claims, **characterized** in using a colloid, such as gum arabic, modified starch, glucose syrup, dextrines and gelatine or mixtures thereof as matrix material.

5. A process according to claim 4, **characterized** in using gelatine having a Bloom strength of from 0-300, preferably from 30-300, as matrix material.

6. A process according to any one of the preceding claims, **characterized** in that the matrix material comprises a wax selected from the group consisting of carnauba wax, candelila wax, paraffin wax, and synthetic waxes.

7. A process according to any of the preceding claims, **characterized** in using as spraying agent modified starch, casein, tricalcium phosphate, lactose, ethyl cellulose, coagulated albumin, cured gelatine, hydrogenated castor oil, polyoxide, talc, vegetable wax and paraffin wax or mixtures thereof in a proportion of at least 1 part by weight of spraying agent per part by weight of emulsion, suspension or solution.

8. A process according to any of the preceding claims, **characterized** in using a proportion of from 1/99 to 2/3 parts by weight of flavourant per part by weight of matrix material.

9. A process according to any of the preceding claims, **characterized** in using from 1-15% by weight of flavourant, from 20-35% by weight of colloid and from 1-8% by weight of wax in the emulsion or suspension.

10. Microcapsules prepared according to any one of claims 1 to 9, **characterized** in that wax constitutes from 5-20% by weight of the microcapsule.

11. Microcapsules prepared according to any one of claims 1 to 9, **characterized** in that the flavourant constitutes from 0.1 - 40% by weight of the finished microcapsules.

12. Microcapsules prepared according to any one of claims 1 to 9, **characterized** in that the finished microcapsule has a particle size of from 50 to 1000 µm.

13. Microcapsules prepared according to any one of claims 10 to 12, **characterized** in that the particle density varies within the range of 1.1 to 1.4 g/ml.

14. A chewing gum containing microcapsules comprising a flavourant embedded in a matrix material, **characterized** in that it contains microcapsules according to any one of claims 10 to 12.

## Patentansprüche

1. Verfahren zur Herstellung von Mikrokapseln, welche einen in einem Matrixmaterial eingelagerten Aromastoff enthalten und das ausserdem die Zerstäubung einer wässrigen Emulsion, Suspension oder Lösung des Aromastoffes und des Matrixmateriales unter Zuführung von Luft, die eine Temperatur von 50° bis 120°C hat, umfasst, während gleichzeitig ein aus feinen Partikeln bestehendes Zerstäubungsmittel hinzugefügt wird und das zerstäubte Produkt in einem Fliessbett bei einer Temperatur zwischen 0° und 120°C einer weiteren Eintrocknung ausgesetzt wird, um ein freifliessendes Produkt zu formen, dadurch **gekennzeichnet**, dass das Matrixmaterial ausserdem Wachs enthält.

2. Verfahren nach Anspruch 1, dadurch **gekennzeichnet**, dass eine Emulsion eines Öles, welches einen Aromastoff enthält und eine wässrige, kolloide Lösung unter Zuführung von Luft, die eine Temperatur von 60° bis 85°C hat, zerstäubt wird und dass das zerstäubte Produkt bei einer Temperatur zwischen 20° und 85°C einer weiteren Behandlung in einem Fliessbett ausgesetzt wird.

3. Verfahren nach Ansprüchen 1 oder 2, dadurch **gekennzeichnet**, dass eine Emulsion zerstäubt wird, die Öltropfen mit einem Diameter von 0,2-10 μm, welche einen Aromastoff enthalten, umfassen.

4. Verfahren nach irgendeinem der vorgenannten Ansprüche, dadurch **gekennzeichnet**, dass als Matrixmaterial ein Kolloid wie Gummi Arabicum, modifizierte Stärke, Glukosesirup, Dextrine und Gelatine oder eine Mischung hieraus angewandt wird.

5. Verfahren nach Anspruch 4, dadurch **gekennzeichnet**, dass als Matrixmaterial Gelatine verwandt wird, die eine Bloom Stärke von 0-300, vorzugsweise 30-300, hat.

6. Verfahren nach irgendeinem der vorgenannten Ansprüche, dadurch **gekennzeichnet**, dass das Matrixmaterial ein Wachs enthält, das aus der Gruppe, die aus Carnaubawachs, Candelilawachs, Paraffinwachs und synthetischem Wachs besteht, ausgewählt wird.

7. Verfahren nach irgendeinem der vorgenannten Ansprüche, dadurch **gekennzeichnet**, dass als Zerstäubungsmittel modifizierte Stärke, Kasein, Trikalziumphosphat, Laktose, Ethyl Zellulose, koaguliertes Albumin, vulkanisierte Gelatine, hydrogeniertes Rizinusöl, Polyoxid, Talcum, vegetabiles Wachs und Paraffinwachs oder Mischungen hieraus in einem Verhältnis von mindestens 1 Gewichtsteil Zerstäubungsmittel pro Gewichtsteil Emulsion, Suspension oder Lösung angewandt werden.

8. Verfahren nach irgendeinem der vorgenannten Ansprüche, dadurch **gekennzeichnet**, dass ein Verhältnis von 1/99 bis 2/3 Gewichtsteil Aromastoff pro Gewichtsteil Matrixmaterial angewandt wird.

9. Verfahren nach irgendeinem der vorgenannten Ansprüche, dadurch **gekennzeichnet**, dass 1-15 Gew.% Aromastoff, 20-35 Gew.% Colloid und 1-8 Colloid und 1-8 Gew.% Wachs in der Emulsion oder Suspension angewandt werden.

10. Mikrokapseln hergestellt nach irgendeinem der Ansprüche 1 bis 9, dadurch **gekennzeichnet**, dass Wachs 5-20 Gew.% der Mikrokapsel ausmacht.

11. Mikrokapseln hergestellt nach irgendeinem der Ansprüche 1 bis 9, dadurch **gekennzeichnet**, dass der Aromastoff 0,1-40 Gew.% der fertigen Mikrokapseln ausmacht.

12. Mikrokapseln hergestellt nach irgendeinem der Ansprüche 1 bis 9, dadurch **gekennzeichnet**, dass die fertige Mikrokapsel eine Teilchengrösse von 50 bis 1000 μm hat.

13. Mikrokapseln hergestellt nach irgendeinem der Ansprüche 10 bis 12, dadurch **gekennzeichnet**, dass die Teilchendichte innerhalb der Grössenordnung 1,1 bis 1,4 g/ml variiert.

14. Ein Kaugummi, das Mikrokapseln mit in einem Matrixmaterial eingelagerten Aromastoff enthält, dadurch **gekennzeichnet**, dass es Mikrokapseln nach irgendeinem der Ansprüche 10 bis 12 enthält.

## Revendications

1. Procédé pour la préparation de microcapsules contenant un agent aromatique incorporé dans une substance matrice comprenant la pulvérisation d'une émulsion aqueuse, suspension ou solution de l'agent aromatique et de la substance matrice sous alimentation d'air à une température de 50°C jusqu'à 120°C tout en introduisant simultanément un agent de pulvérisation particulaire fin et en soumettant le produit pulvérisé à un séchage supplémentaire dans un lit fluidisé à une température entre 0°C et 120°C pour former un produit s'écoulant librement, caractérisé en ce que la substance matrice comprend de plus de la cire.

2. Procédé selon la revendication 1, caractérisé en ce qu'une émulsion d'une huile contenant un agent aromatique et une solution colloïdale aqueuse est pulvérisée sous alimentation d'air ayant une température allant de 60° à 85°C, et en ce que le produit pulvérisé est soumis à un traitement supplémentaire dans un lit fluidisé à une température entre 20° et 85°C.

3. Procédé selon la revendication 1 ou 2, caractérisé en ce que l'on pulvérise une émulsion comprenant des gouttelettes d'huile contenant un agent aromatique d'un diamètre allant de 0,2-10 µm.

4. Procédé selon l'une quelconque des revendications précédentes, caractérisé en ce que l'on utilise un colloïde tel qu'une gomme arabique, de l'amidon modifié, du sirop de glucose, des dextrines et de la gélatine ou leurs mélanges en tant que substance matrice.

5. Procédé selon la revendication 4, caractérisé en ce que l'on utilise de la gélatine ayant une résistance Bloom allant de 0-300, de préférence de 30-300 comme substance matrice.

6. Procédé selon l'une quelconque des revendications précédentes, caractérisé en ce que la substance matrice comprend une cire choisie dans le groupe constitué par de la cire de carnauba, de la cire de candelila, de la cire paraffine et des cires synthétiques.

7. Procédé selon l'une quelconque des revendications précédentes, caractérisé en ce que l'on utilise comme agent de pulvérisation de l'amidon modifié, de la caséine, du phosphate de tricalcium, du lactose, de la cellulose d'éthyle, de l'albumine coagulée, de la gélatine durcie, de l'huile de ricin hydrogénée, un polyoxyde, du talc, de la cire végétale et de la cire paraffine ou leurs mélanges dans une proportion d'au moins une partie en poids de l'agent pulvérulent par partie en poids de l'émulsion, de la suspension ou de la solution.

8. Procédé selon l'une quelconque des revendications précédentes, caractérisé en ce que l'on utilise une proportion allant de 1/99 à 2/3 parties en poids de l'agent aromatique par partie en poids de la substance matrice.

9. Procédé selon l'une quelconque des revendications précédentes, caractérisé en ce que l'on utilise de 1-15 % en poids de l'agent aromatique, de 20-35 % en poids de colloïde et de 1-8 % en poids de cire dans l'émulsion ou la suspension.

10. Microcapsules préparées selon l'une quelconque des revendications 1 à 9, caractérisées en ce que la cire constitue de 5-20 % en poids de la microcapsule.

11. Microcapsules préparées selon l'une quelconque des revendications 1 à 9, caractérisées en ce que l'agent aromatique constitue de 0,1-40 % en poids des microcapsules finies.

12. Microcapsules préparées selon l'une quelconque des revendications 1 à 9, caractérisées en ce que la microcapsule finie a une taille particulaire allant de 50 à 1000 µm.

13. Microcapsules préparées selon l'une quelconque des revendications 10 à 12, caractérisées en ce que la densité de particules varie dans la plage de 1,1 jusqu'à 1,4 g/ml.

14. Gomme à mâcher contenant les microcapsules comprenant un agent aromatique enfermé dans une substance matrice, caractérisée en ce qu'elle contient les microcapsules selon l'une quelconque des revendications 10 à 12.